# EUROPÄISCHE PATENTSCHRIFT

(11) **EP 2 298 631 B1**
(45) Veröffentlichungstag und Bekanntmachung des Hinweises auf die Patenterteilung: **31.10.2012**
(21) Anmeldenummer: 09011977.7
(22) Anmeldetag: 21.09.2009
(51) Int. Cl.: B62D 65/18

(54) **Transportvorrichtung für eine Fahrzeugmontageeinrichtung**
Transport device for a vehicle assembly device
Dispositif de transport pour un dispositif de montage de véhicule

(43) Veröffentlichungstag der Anmeldung: 23.03.2011
(73) Patentinhaber: SIEMENS AKTIENGESELLSCHAFT, 80333 München (DE)
(72) Erfinder: Assmann, Roland Heinz, 63654 Büdingen (DE)

(56) Entgegenhaltungen:
- EP-A1- 1 473 258
- JP-A- 6 156 662
- US-A1- 2003 000 413
- US-A1- 2009 067 962

## Beschreibung

Die Erfindung betrifft eine Transportvorrichtung für Fahrzeugmontageeinrichtungen, die sich beispielsweise entlang Produktionsstraßen erstrecken.

Zur Optimierung von Fertigungsläufen werden in Fahrzeugmontageeinrichtungen seit Jahrzehnten Fließbänder verwendet. Dabei werden zu fertigende Fahrzeuge, insbesondere Automobile, von einer Arbeitsstation zur nächsten transportiert. An jeder Arbeitsstation werden üblicherweise nur wenige, relativ einfache Arbeitsschritte durchgeführt. Zum Fahrzeugtransport in Fahrzeugmontageeinrichtungen verwendete Fördersysteme müssen vielfältige Anforderungen erfüllen. Zum einen sind die zu transportierenden Fahrzeuge als Werkstücke verhältnismäßig schwer. Andererseits müssen die Fahrzeuge zur Bearbeitung von möglichst vielen Seiten gut zugänglich sein, insbesondere damit Arbeitsschritte ergonomisch ausgeführt werden können.

Üblicherweise werden noch nicht vollständig montierte Fahrzeuge mittels Hängeförderer in einer Fahrzeugmontageeinrichtung transportiert. Stark verbreitet sind Elektrohängebahnen. Aus DE 31 46 807 A1 ist ein Fördersystem bekannt, bei der eine Kraftfahrzeugkarosserie zum Transport an Trägern aufgehängt ist. Arbeiten wie Leitungsverlegung oder Einbauten im Motorraum erfolgen häufig, wenn die Kraftfahrzeugkarosserie mittels eines Hängeförderers transportiert wird. Vielfach wird ein zu montierendes Fahrzeug nach einer Bearbeitung als hängendes Werkstück an eine Plattformanlage zu übergeben, auf der das Fahrzeug transportiert wird. Dies geschieht üblicherweise vor bzw. nach Vereinigung von Antriebsstrang und Karosserie im Rahmen der "Hochzeit". Wenn das zu montierende Fahrzeug auf der Plattformanlage transportiert wird, ist das Fahrzeug für Arbeiten wie Scheibenkleben, Türeinbau, Cockpiteinbau oder Sitzeinbau gut zugänglich.

In DE 10 2005 062 691 A1 ist ein Fördersystem einer Montageeinrichtung für Kraftfahrzeuge beschrieben, bei der für jedes Kraftfahrzeug eine fahrbare Plattform vorgesehen ist, die eine Hubeinrichtung für ein Kraftfahrzeug umfaßt. Die Hubeinrichtung ist in einer Vertikalprojektion neben dem Kraftfahrzeug angeordnet. Für im wesentlichen jedes zu fertigende Kraftfahrzeug ist eine fahrbare Plattform vorgesehen. Das Kraftfahrzeug verbleibt während des gesamten Fertigungsablaufs auf der Plattform. Auf diese Weise kann ein aufwendiges Umsetzen des Kraftfahrzeugs von einem Hängeförderer auf eine Plattformanlage entfallen, wodurch der Fertigungsablauf weniger unterbrechungsgefährdet ist.

Aus der gattungsgemäβen US 2003/000413 A1 und JP 06 156662 A ist jeweils ein Elektrohängebahnsystem für eine Fahrzeugmontageeinrichtung bekannt, bei dem ein durch eine Hängebahn geführter Trägerrahmen mit mehreren Aufnahmeelementen verbunden ist, die jeweils um eine zur Transportrichtung senkrechte Drehachse drehbar sind. Mit den Aufnahmeelementen ist jeweils ein Trägerelement zur Fahrzeugkarosserieaufnahme verbunden. Jedes Trägerelement ist dabei exzentrisch zur Drehachse des jeweiligen Aufnahmeelements bewegbar.

Der vorliegenden Erfindung liegt die Aufgabe zugrunde, eine Transportvorrichtung für eine Fahrzeugmontageeinrichtung zu schaffen, die eine verbesserte Karosseriezugänglichkeit für Arbeiter in einer Fahrzeugmontageeinrichtung und ergonomische Arbeitsabläufe ermöglicht.

Diese Aufgabe wird erfindungegemäß durch eine Transportvorrichtung mit den in Anspruch 1 angegebenen Merkmalen gelöst. Vorteilhafte Weiterbildungen der vorliegenden Erfindung sind in den abhängigen Ansprüchen angegeben.

Die erfindungsgemäße Transportvorrichtung für eine Fahrzeugmontageeinrichtung umfaßt ein auf einer Transportebene verfahrbares Grundelement. Mit dem Grundelement sind zumindest zwei Sockelelemente verbunden, die jeweils um eine zur Transportebene senkrechte Drehachse drehbar sind. Außerdem ist zumindest jeweils ein mit einem sockelelement verbundenes Trägerelement zur Fahrzeugkarosserieaufnahme vorgesehen, das exzentrisch zur Drehachse des Sockelelements bewegbar ist. Die Sockelelemente sind jeweils mit einer Hubvorrichtung verbunden, wobei die Trägerelemente mittels der Hubvorrichtungen parallel zu den Drehachsen der Sockelelemente beweglich sind. Die Hubvorrichtungen können jeweils einen individuell ausfahrbaren Teleskopmechanismus umfassen.

Dadurch daß Trägerelemente exzentrisch zur Drehachse des jeweiligen Sockelelements bewegbar sind, können die Trägerelemente auf verschiedene Weise an einem Fahrzeugunterboden zur Lastabstützung positioniert werden. In einer ersten Stellung können die Trägerelemente beispielsweise in Fahrzeuglängarichtung gesehen in einem Außenbereich des Fahrzeugunterbodens positioniert werden, so daß Antriebsstrang und Karosserie leicht miteinander verbunden werden können. Außerdem sind in dieser Stellung im wesentlichen alle Bereiche des Fahrzeugunterbodens gut zugänglich, in denen beispielsweise Leitungen zu verlegen sind. Dementsprechend können die Trägerelemente beispielsweise in einer zweiten Stellung in einem Innenbereich positioniert werden, so daß insbesondere in tiefen Positionen der Trägerelemente Vorder- und Hinterseite sowie Außenseite und Karosserieoberseite frei zugänglich sind. Insgesamt ergibt sich durch diese Stellungen und weitere mögliche Stellungen der Trägerelemente eine nahezu uneingeschränkte Zugänglichkeit zu einer Kraftfahrzeugkarosserie. Dies ermöglicht wiederum eine Realisierung eines durchgängigen Fördertechnikkonzepts, so daß aufwendige Umsetzvorgänge eines Kraftfahrzeugs von einem Hängeförderer auf eine Plattformanlage entfallen können. Darüber hinaus sind in einer Fahrzeugmontagehalle keine platzbeanspruchenden Trägerkonstruktionen für Hängeförderer erforderlich.

Entsprechend einer vorteilhaften Weiterbildung der vorliegenden Erfindung sind die Sockelelemente am Grundelement gelagert sind, und die Trägerelemente jeweils sind auf einer Hubvorrichtung befestigt. Außerdem können die Sockelelemente einen kreisförmigen Querschnitt aufweisen, wobei die Drehachsen der Sockelelemente jeweils mittig durch die Sockelelemente verlaufen und die Hubvorrichtungen jeweils außermittig auf einem Sockelelement befestigt sind. Alternativ dazu können die Hubvorrichtungen am Grundelement befestigt sein, wobei die Sockelelemente jeweils auf einer Hubvorrichtung gelagert sind. In diesem Fall sind die Trägerelemente jeweils auf einem Sockelelement angeordnet, und die Drehachsen der Sockelelemente können jeweils außermittig durch die Sockelelemente verlaufen. Darüber hinaus können die Trägerelemente jeweils einstückig an die Sockelelemente angeformt sein.

Die vorliegende Erfindung wird nachstehend an einem Ausführungsbeispiel anhand der Zeichnung näher erläutert. Es zeigt
- Figur 1: eine Transportvorrichtung für eine Fahrzeugmontage in perspektivischer Darstellung,
- Figur 2: die in Figur 1 dargestellte Transportvorrichtung aus Fahrzeugfrontansicht,
- Figur 3: die in Figur 1 dargestellte Transportvorrichtung mit geänderter Trägerelementstellung,
- Figur 4: die in Figur 3 dargestellte Transportvorrichtung aus Fahrzeugfrontansicht,

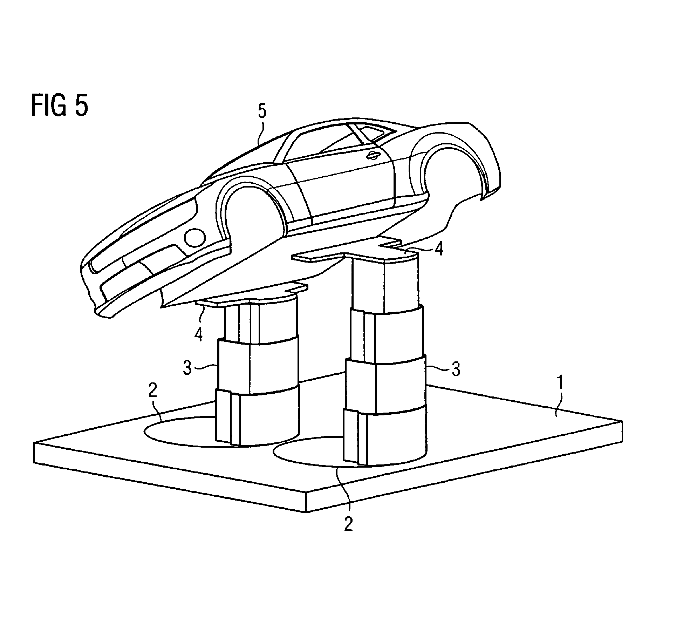

- Figur 5: die in Figur 1 dargestellte Transportvorrichtung mit geänderter Trägerelementstellung und geänderter Hubvorrichtungseinstellung.

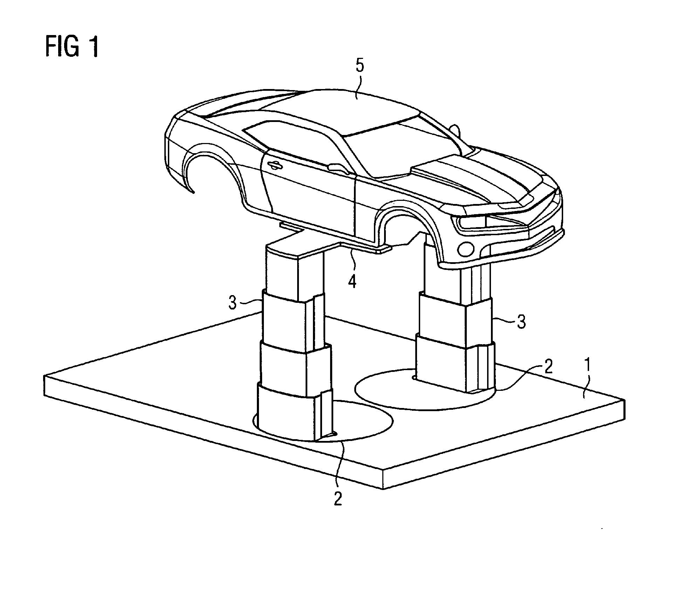

Die in Figur 1 dargestellte Transportvorrichtung umfaßt ein auf einer Transportebene verfahrbares Grundelement 1. Das Grundelement 1 kann beispielsweise ein ferngesteuert lenkbares Fahrzeug oder ein schiengeführtes Fahrzeug sein. Die Transportebene erstreckt sich im vorliegenden Ausführungsbeispiel parallel zum Grundelement 1. Am Grundelement 1 sind zwei Sockelelemente 2 gelagert, die jeweils um eine zur Transportebene senkrechte Drehachse drehbar sind. Darüber hinaus können die Sockelelemente 2 in Längs- bzw. Querrichtung des Grundelements 1 auf dem Grundelement 1 verschiebbar fixiert sein.

Die Sockelelemente 2 weisen einen kreisförmigen Querschnitt auf, und die Drehachsen der Sockelelemente 2 verlaufen im vorliegenden Ausführungsbeispiel jeweils mittig durch die Sockelelemente 2. Auf den Sockelelementen 2 ist jeweils außermittig eine Hubvorrichtung 3 befestigt, die bei Drehung des jeweiligen Sockelelements 2 eine exzentrische Kurve beschreibt. Die Hubvorrichtungen 3 umfassen jeweils einen auf einer Spiral-Hubeinheit basierenden Teleskopmechanismus und sind individuell auf unterschiedliche Höhen ausfahrbar, so daß ein Fahrzeug 5 auf der Transportvorrichtung um seine Längsachse kippbar ist.

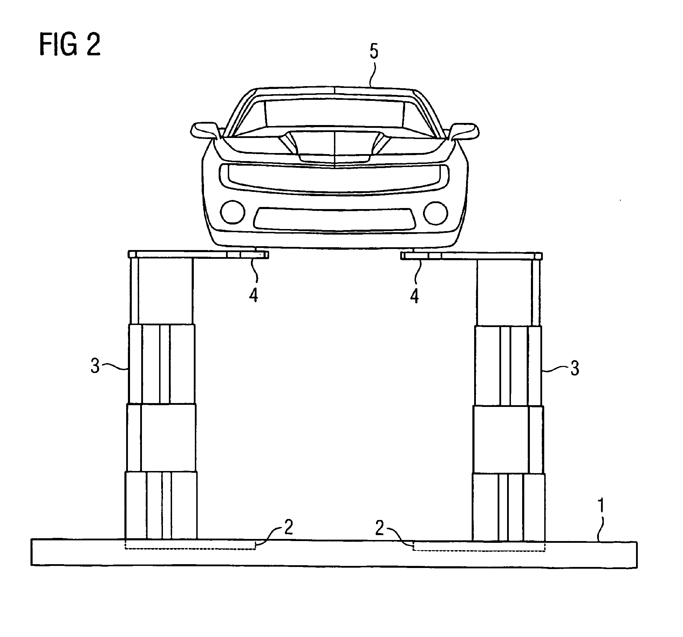

Anhand von Figur 2 ist zu erkennen, daß auf den Hubvorrichtungen 3 jeweils ein austauschbares Trägerelement 4 zur Aufnahme eines Fahrzeugs 5 befestigt ist, das exzentrisch zur Drehachse des jeweils zugeordneten Sockelelements bewegbar ist. Mittels der Hubvorrichtungen 3 sind die Trägerelemente 4 parallel zu den Drehachsen der Sockelelemente 2 beweglich.

In einer ersten Stellung entsprechend den Figuren 1 und 2 sind die Trägerelemente 4 durch Drehung der Sockelelemente 2 in Fahrzeuglängsrichtung gesehen in einem Außenbereich am Fahrzeugunterboden positioniert. Die Hubvorrichtungen 3 weisen in dieser Stellung einen maximalen Abstand zueinander auf. Des weiteren sind die Hubvorrichtungen 3 in der Stellung entsprechend den Figuren 1 und 2 auf maximale Höhe ausgefahren, so daß beispielsweise Antriebsstrang und Karosserie eines Fahrzeugs 5 leicht miteinander verbunden werden können.

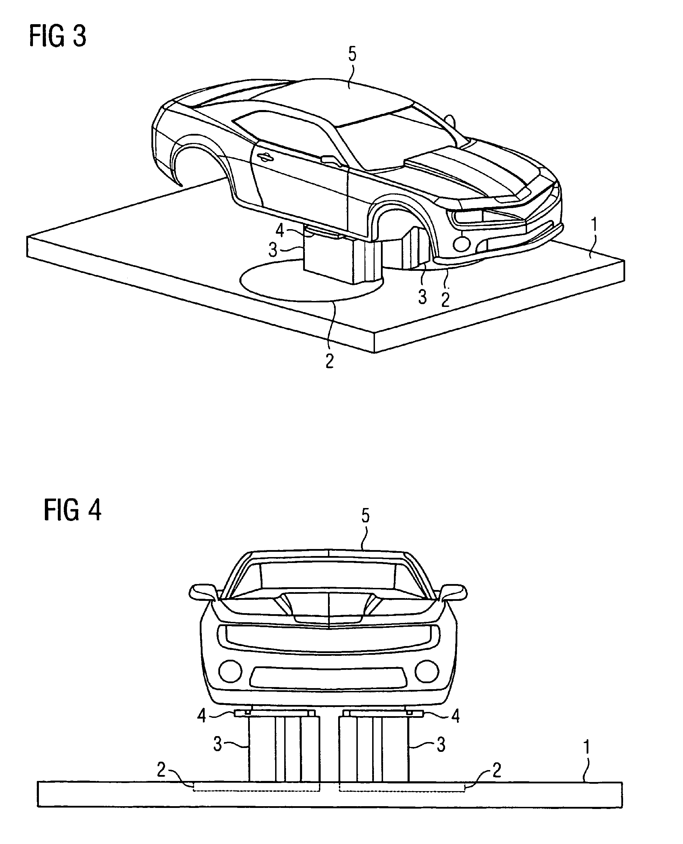

Entsprechend einer zweiten Stellung, die in den Figuren 3 und 4 aus unterschiedlichen Betrachtungswinkeln widergegeben ist, sind die Trägerelemente 4 in einem Innenbereich des Fahrzeugunterbodens positioniert. In dieser Stellung weisen die Hubvorrichtungen 3 einen minimalen Abstand zueinander auf. Darüber hinaus sind die Hubvorrichtungen 3 in der Stellung entsprechend den Figuren 3 und 4 auf eine minimale Höhe eingefahren, so daß beispielsweise, so daß das Fahrzeug 5 für Arbeiten wie Scheibenkleben, Türeinbau, Cockpiteinbau oder Sitzeinbau gut zugänglich ist.

Bei einer weiteren Stellung von Hubvorrichtungen 3 und Trägerelementen 4 sind die Hubvorrichtungen auf unterschiedliche Höhen ausgefahren, und von den Trägerelementen 4 ist eins in den Außenbereich und eins in den Innenbereich des Fahrzeugunterbodens geschwenkt. Hierdurch ist das Fahrzeug 5 um seine Längsachse kippbar, wodurch ein ergonomischer Zugang zum Fahrzeugunterboden ermöglicht wird. Dabei passen sich die Trägerelemente 4 an die um die Längsachse gekippte Karosserie an.

Neben den in Figuren dargestellten Stellungen von Hubvorrichtungen 3 und Trägerelementen 4 sind noch weitere Stellungen möglich, ohne daß in einer Fahrzeugmontagehalle platzbeanspruchenden Trägerkonstruktionen für Hängeförderer erforderlich sind. Damit ist keine Lasteinleitung in eine Oberkonstruktion der Fahrzeugmontagehalle erforderlich, die außerdem vergleichweise niedrig gestaltet sein kann. Darüber hinaus resultiert aus einer reduzierten Anlagenkomplexität infolge eines einheitlichen, durchgängig realisierten Fördertechnikkonzepts eine hohe Anlagenverfügbarkeit. Außerdem läßt sich ein einheitliches Fördertechnikkonzept in einem modularen Aufbau realisieren. Dies ermöglicht eine einfache und schnelle Fertigungsanlagenprojektierung, die zudem einfach an neue Aufgabenstellungen angepaßt werden kann. Hierdurch kann eine Fahrzeugmontageeinrichtung deutlich kostengünstiger realisiert werden. Ferner kann eine frühzeitige Festlegung auf Montageinhalte einzelner Arbeitsstationen vermieden werden.

Da mit dem vorliegenden Fördertechnikkonzept in den Arbeitsstationen Relativbewegung zwischen Fördermittel und Arbeitern im Gegensatz insbesondere zur Hängefördertechnik vermieden werden können, ist im Vergleich zu herkömmlichen Fördertechnikkonzepten ein höheres Sicherheitsniveau erreichbar.

## Patentansprüche

1. Transportvorrichtung für eine Fahrzeugmontageeinrichtung mit
- einem auf einer Transportebene verfahrbaren Grundelement (1),
- zumindest zwei mit dem Grundelement (1) verbundenen Sockelelementen (2), die jeweils um eine zur Transportebene senkrechte Drehachse drehbar sind,
- zumindest jeweils einem mit einem Sockelelement (2) verbundenen Trägerelement (4) zur Fahrzeugkarosserieaufnahme, das exzentrisch zur Drehachse des Sockelelements (2) bewegbar ist,
**dadurch gekennzeichnet, daß**
- das auf der Transportebene verfahrbare Grundelement (1) ein ferngesteuert lenkbares oder schienengeführtes Fahrzeug ist,
- die Sockelelemente (2) jeweils mit einer Hubvorrichtung (3) verbunden sind,
- die Trägerelemente (4) mittels der Hubvorrichtungen (3) parallel zu den Drehachsen der Sockelelemente (2) beweglich sind.

2. Transportvorrichtung nach Anspruch 1,
bei der die Hubvorrichtungen (3) jeweils einen Teleskopmechanismus umfassen.

3. Transportvorrichtung nach Anspruch 2,
bei der jeder Teleskopmechanismus individuell ausfahrbar ist.

4. Transportvorrichtung nach einem der Ansprüche 1 bis 3, bei der die Hubvorrichtungen (3) jeweils eine Spiral-Hubeinheit umfassen.

5. Transportvorrichtung nach einem der Ansprüche 1 bis 4, bei der die Sockelelemente (2) am Grundelement (1) gelagert sind, und bei der die Trägerelemente (4) jeweils auf einer Hubvorrichtung (3) befestigt sind.

6. Transportvorrichtung nach Anspruch 5,
bei der die Sockelelemente (2) einen kreisförmigen Querschnitt aufweisen, und bei der die Drehachsen der Sockelelemente (2) jeweils mittig durch die Sockelelemente (2) verlaufen, und bei der die Hubvorrichtungen (3) jeweils außermittig auf einem Sockelelement (3) befestigt sind.

7. Transportvorrichtung nach einem der Ansprüche 1 bis 4, bei der die Hubvorrichtungen (3) am Grundelement (1) befestigt sind, und bei der die Sockelelemente (2) jeweils auf einer Hubvorrichtung (3) gelagert sind, und bei der die Trägerelemente (4) jeweils auf einem Sockelelement (2) angeordnet sind.

8. Transportvorrichtung nach Anspruch 7,
bei der die Drehachsen der Sockelelemente (2) jeweils außermittig durch die Sockelelemente (2) verlaufen.

9. Transportvorrichtung nach einem der Ansprüche 7 oder 8, bei der die Trägerelemente (4) jeweils einstückig an die Sockelelemente (2) angeformt sind.

10. Transportvorrichtung nach einem der Ansprüche 1 bis 9, bei der die Sockelelemente (2) in Längs- und/oder Querrichtung des Grundelements (1) auf dem Grundelement (1) verschiebbar sind.

11. Transportvorrichtung nach einem der Ansprüche 1 bis 10, bei der die Trägerelemente (4) austauschbar sind.

12. Transportvorrichtung nach einem der Ansprüche 1 bis 10, bei der die Trägerelemente (4) an eine um eine Fahrzeuglängsachse gekippte Karosserie anpaßbar ausgestaltet sind.

## Claims

1. Transporting apparatus for a vehicle assembly plant, having
- a base element (1) that can be displaced on a transporting plane,
- at least two pedestal elements (2), which are connected to the base element (1) and can in each case be rotated about a rotational axis perpendicular to the transporting plane, and
- at least in each case one support element (4), for holding a vehicle body, which is connected to a pedestal element (2) and can be moved eccentrically with respect to the rotational axis of the pedestal element (2), **characterized in that**
- the base element (1) that can be displaced on a transporting plane is a vehicle which can be steered by remote control or is a rail-guided vehicle,
- the pedestal elements (2) are connected in each case to a lifting apparatus (3),
- the support elements (4) can be moved by means of the lifting apparatuses (3) parallel to the rotational axes of the pedestal elements (2).

2. Transporting apparatus according to Claim 1,
in which the lifting apparatuses (3) comprise in each case a telescopic mechanism.

3. Transporting apparatus according to Claim 2,
in which each telescopic mechanism can be extended individually.

4. Transporting apparatus according to one of Claims 1 to 3, in which the lifting apparatuses (3) comprise in each case a spiral lifting unit.

5. Transporting apparatus according to one of Claims 1 to 4, in which the pedestal elements (2) are mounted on the base element (1), and in which the support elements (4) are secured in each case on a lifting apparatus (3).

6. Transporting apparatus according to Claim 5,
in which the pedestal elements (2) have a circular cross section, and in which the rotational axes of the pedestal elements (2) extend in each case centrally through the pedestal elements (2), and in which the lifting apparatuses (3) are secured in each case off-center on a pedestal element (2).

7. Transporting apparatus according to one of Claims 1 to 4, in which the lifting apparatuses (3) are secured to the base element (1), and in which the pedestal elements (2) are mounted in each case on a lifting apparatus (3), and in which the support elements (4) are arranged in each case on a pedestal element (2).

8. Transporting apparatus according to Claim 7,
in which the rotational axes of the pedestal elements (2) extend in each case off-center through the pedestal elements (2).

9. Transporting apparatus according to either of Claims 7 and 8,
in which the support elements (4) are in each case integrally formed on the pedestal elements (2).

10. Transporting apparatus according to one of Claims 1 to 9, in which the pedestal elements (2) can be displaced on the base element (1) in the longitudinal and/or transverse direction of the base element (1).

11. Transporting apparatus according to one of Claims 1 to 10,
in which the support elements (4) are exchangeable.

12. Transporting apparatus according to one of Claims 1 to 10,
in which the support elements (4) are designed such that they can be adapted to a vehicle body tilted about a longitudinal axis of the vehicle.

## Revendications

1. Installation de transport pour un dispositif de montage de véhicule, comprenant
- un élément ( 1 ) de base pouvant être déplacé sur un plan de transport,
- au moins deux éléments ( 2 ) de socle, qui sont reliés à l'élément ( 1 ) de base et qui peuvent tourner respectivement autour d'un axe de rotation perpendiculaire au plan de transport,
- au moins respectivement un élément ( 4 ) de support qui est relié à un élément ( 2 ) de socle pour la réception d'une carrosserie du véhicule et qui peut être déplacé de manière excentrée par rapport à l'axe de rotation de l'élément ( 2 ) de socle,
**caractérisée en ce que**
- l'élément ( 1 ) de base pouvant être déplacé sur le plan de transport est un véhicule pouvant être conduit de manière télécommandée ou guidée sur rail,
- les éléments ( 2 ) de socle sont reliés respectivement à un dispositif ( 3 ) de levage,
- les éléments ( 4 ) de support sont mobiles au moyen des dispositifs ( 3 ) de levage parallèlement aux axes de rotation des éléments ( 2 ) de socle.

2. Installation de transport suivant la revendication 1,
dans laquelle les dispositifs ( 3 ) de levage comprennent respectivement un mécanisme télescopique.

3. Installation de transport suivant la revendication 2,
dans laquelle chaque mécanisme télescopique peut être déplacé individuellement.

4. Installation de transport suivant l'une des revendications 1 à 3,
dans laquelle les dispositifs ( 3 ) de levage comprennent respectivement une unité de levage en spirale.

5. Installation de transport suivant l'une des revendications 1 à 4,
dans laquelle les éléments ( 2 ) de socle sont montés sur l'élément ( 1 ) de base, et dans lesquels les éléments ( 4 ) de support sont fixés respectivement sur un dispositif ( 3 ) de levage.

6. Installation de transport suivant la revendication 5,
dans laquelle les éléments ( 2 ) de socle ont une section transversale circulaire, et dans laquelle les axes de rotation des éléments ( 2 ) de socle traversent respectivement les éléments ( 2 ) de socle au milieu, et dans laquelle les éléments ( 4 ) de support sont disposés respectivement sur un élément ( 2 ) de socle.

7. Installation de transport suivant l'une des revendications 1 à 4,
dans laquelle les dispositifs ( 3 ) de levage sont fixés sur l'élément ( 1 ) de base et dans laquelle les éléments ( 2 ) de socle sont montés respectivement sur un dispositif ( 3 ) de levage et dans laquelle les éléments ( 4 ) de support sont disposés respectivement sur un élément ( 2 ) de socle.

8. Installation de transport suivant la revendication 7,
dans laquelle les axes de rotation des éléments ( 2 ) de socle traversent les éléments ( 2 ) de socle respectivement en dehors du milieu.

9. Installation de transport suivant 1"une des revendications 7 ou 8,
dans laquelle les éléments ( 4 ) de support sont formés respectivement d'un seul tenant avec les éléments ( 2 ) de socle.

10. Installation de transport suivant l'une des revendications 1 à 9,
dans laquelle les éléments ( 2 ) de socle peuvent coulisser, dans la direction longitudinale et/ou transversale de l'élément ( 1 ) de base, sur l'élément ( 1 ) de base.

11. Installation de transport suivant l'une des revendications 1 à 10,
dans laquelle les éléments ( 4 ) de support peuvent être remplacés.

12. Installation de transport suivant l'une des revendications 1 à 10,
dans laquelle les éléments ( 4 ) de support sont conformés de manière à pouvoir s'adapter à une carrosserie basculée autour d'un axe longitudinal de véhicule.
